# EUROPÄISCHE PATENTANMELDUNG

(11) **EP 1 783 034 A2**
(43) Veröffentlichungstag der Anmeldung: **09.05.2007**
(21) Anmeldenummer: 06019833.0
(22) Anmeldetag: 22.09.2006
(51) Int. Cl.: B62D 15/02

(54) **Vorrichtung zur Anordnung in einem Lenksystem eines Kraftfahrzeugs**

(30) Priorität: 03.11.2005 DE 10553180
(71) Anmelder: Valeo Schalter und Sensoren GmbH, 74321 Bietigheim-Bissingen (DE)
(72) Erfinder: Ruetz, Christian, 71636 Ludwigsburg (DE); Schoepe, Roman, 74321 Bietigheim-Bissingen (DE)
(74) Vertreter: Thielking, Klaus

(57) **Zusammenfassung**

Die Erfindung betrifft eine Vorrichtung (2, 10) zur Anordnung in einem Lenksystem eines Kraftfahrzeugs, mit einem ersten Kodierelement (92, 124), das mit dem Lenkrad des Lenksystems drehwinkelfest verbindbar ist, und mit einem zweiten Kodierelement (94, 126), das zumindest mittelbar mit der Lenkwelle (4) des Lenksystems drehwinkelfest und/oder drehwinkelgekoppelt verbindbar ist, wobei die Vorrichtung (2, 10) mindestens eine Sensoranordnung (114, 132) zur Erfassung der Drehwinkelstellung eines der Kodierelemente (92, 94, 124, 126) und zur Erfassung des Winkelversatzes zwischen den Kodierelementen (92, 94; 124, 126) aufweist.

## Beschreibung

Die Erfindung betrifft eine Vorrichtung zur Anordnung in einem Lenksystem eines Kraftfahrzeugs, mit einem ersten Kodierelement, das mit dem Lenkrad des Lenksystems drehwinkelfest verbindbar ist, und mit einem zweiten Kodierelement, das zumindest mittelbar mit der Lenkwelle des Lenksystems drehwinkelfest und/oder drehwinkelgekoppelt verbindbar ist.

Aus der DE 103 50 666 A1 ist ein Lenkwinkelsensor bekannt, der zwei Kodierelemente aufweist, so dass der Drehwinkel des Lenkrads mit einer hohen Auflösung bestimmbar ist.

Aus der DE 102 56 322 A1 ist eine Vorrichtung zum Bestimmen eines auf eine Welle ausgeübten Drehmoments bekannt, das ebenfalls ein Kodierelement aufweist. Dieses ist an einem Abschnitt der Lenkwelle befestigt, der zu einem benachbarten Abschnitt der Lenkwelle verdrehbar ist. Das Maß der Relativverdrehung zwischen den Wellenabschnitten ist ein Maß für das an der Lenkwelle anliegende Drehmoment.

Im Kraftfahrzeugbau wird in jüngster Zeit verstärkt versucht, die Endmontage eines Kraftfahrzeugs zu vereinfachen, indem immer komplexere Vormontagegruppen gebildet werden. Dabei vereinfacht sich die Endmontage besonders dann, wenn die Anzahl der mechanischen und/oder elektrischen Schnittstellen der Vormontagegruppen zum Kraftfahrzeug reduziert werden kann.

Hiervon ausgehend liegt der vorliegenden Erfindung die Aufgabe zugrunde, eine Vorrichtung zur Anordnung in einem Lenksystems eines Kraftfahrzeugs zu schaffen, mit der zur Reduzierung der mechanischen oder elektrischen Schnittstellen zu einem Kraftfahrzeug dessen Endmontage erleichtert werden kann.

Diese Aufgabe wird erfindungsgemäß dadurch gelöst, dass die Vorrichtung mindestens eine Sensoranordnung zur Erfassung der Drehwinkelstellung eines der Kodierelemente und zur Erfassung des Winkelversatzes zwischen den Kodierelementen aufweist.

Durch die Erfassung der Drehwinkelstellung eines der Kodierelemente kann der Lenkwinkel des Lenksystems ermittelt werden. Durch die Erfassung des Winkelversatzes zwischen den Kodierelementen ist es möglich, ein an dem Lenkrad und der Lenkwelle anliegendes Drehmoment zu bestimmen. Es ist im Rahmen der Erfindung möglich, dass die Erfassung des Winkelversatzes zwischen den Kodierelementen direkt ermittelt wird. Es ist aber auch möglich, dass die absoluten Drehwinkelstellungen beider Kodierelemente ermittelt werden, um daraus den Winkelversatz zwischen den Kodierelementen zu ermitteln.

Die erfindungsgemäße Vorrichtung ermöglicht es, einen Lenkwinkelsensor und einen Drehmomentsensor zu einer baulichen Einheit zu integrieren. Der für bekannte Drehmomentsensoren in einem lenkradfernen Bereich benötigte Bauraum entfällt, so dass dieser für andere Zwecke genutzt werden kann. Da die Kodierelemente in einem lenkradnahen Bereich angeordnet sind, sind sie dort vor Schmutz und Temperatureinflüssen besser geschützt. Gleichzeitig kann die Montage der zu einer Vorrichtung kombinierten Lenkwinkelsensoren und Drehmomentsensoren erleichtert werden. Dies gilt auch für die für die Sensoranordnung erforderlichen elektrischen Anschlüsse und auch für eine mit der Sensoranordnung in Verbindung stehende Auswerteeinheit.

Wenn die Vorrichtung die Lenkwelle und das Lenkrad umfasst, können diese so miteinander verbunden sein, dass sie zueinander einen Winkelversatz zulassen, insbesondere einen maximalen Winkelversatz von +/- 7°. Eine solche, einen Winkelversatz zulassende Verbindung zwischen Lenkwelle und Lenkrad ist in einer zeitgleich eingereichten deutschen Patentanmeldung "Vorrichtung für ein Lenksystem eines Kraftfahrzeugs" (Aktenzeichen: De 10 2005 053 181.4) derselben Anmelderin beschrieben. Auf den Offenbarungsgehalt der Unterlagen der genannten Patentanmeldung wird Bezug genommen.

Das zweite Kodierelement kann auch unter Zwischenschaltung weiterer Elemente, bspw. eines Rotorelements und/oder eines Getriebes mit der Lenkwelle verbunden werden, wie dies in einer zeitgleich eingereichten deutschen Patentanmeldung "Baugruppe für ein Lenksystem eines Kraftfahrzeugs" (Aktenzeichen: DE 10 2005 053 183.0) derselben Anmelderin beschrieben ist. Auf den Offenbarungsgehalt der Unterlagen dieser Patentanmeldung wird Bezug genommen. Beispielsweise kann das Kodierelement mit einem Rotorelement drehfest verbunden sein, wobei das Rotorelement über Getriebeelemente mit der Lenkwelle in Verbindung steht. Hierdurch entsteht eine Drehwinkelkoppelung des Rotorelements einerseits und der Lenkwelle andererseits. Diese können sich auch gegensinnig drehen; entscheidend ist, dass die Drehung des zweiten Kodierelements zumindest weitestgehend winkelversatzfrei der Drehung der Lenkwelle entspricht.

Die Sensoranordnung kann mindestens einen Sensor umfassen, der dem ersten Kodierelement und dem zweiten Kodierelement zugeordnet ist. Hierdurch können weitere Bauteile eingespart werden, da mit einem Sensor sowohl die Drehwinkelstellung eines der Kodierelemente als auch der Winkelversatz zwischen den Kodierelementen erfasst werden kann.

Es ist auch möglich, dass zusätzlich oder optional die Sensoranordnung mindestens zwei Sensoren umfasst, die jeweils einem Kodierelement zugeordnet sind. Hindurch kann der absolute Drehwinkel jedes der Kodierelemente ermittelt werden, beispielsweise um den Winkelversatz zwischen den Kodierelementen zu ermitteln oder um die oben beschriebene Sensoranordnung mit einem Sensor, der beiden Kodierelementen zugeordnet ist, zu ergänzen. Durch Verwendung mehrerer Sensoren und/oder Sensoranordnungen ist es möglich, die zur Erfassung der Drehwinkelstellung eines der Kodierelemente und zur Erfassung des Winkelversatzes zwischen den Kodierelementen benötigten Informationen mehrfach zu ermitteln, um eine redundante Auswertung zu ermöglichen.

Die Vorrichtung umfasst in vorteilhafter Weise eine Auswerteeinheit zur Auswertung der Signale der Sensoranordnung. Es kann vorzugsweise dieselbe Auswerteeinheit zur Auswertung aller Sensoren sämtlicher Sensoranordnungen verwendet werden. Hierdurch kann die Anzahl der benötigten Bauteile auf ein Minimum reduziert werden.

In vorteilhafter Weise sind die Kodierelemente ringförmig oder scheibenförmig ausgebildet. Somit nehmen die Kodierelemente wenig Bauraum ein. Die Kodierelemente sind entweder direkt an der Lenkwelle beziehungsweise dem Lenkrad befestigt oder mittelbar mit diesen verbunden, beispielsweise mit Hilfe zwischengeschalteter mechanischer Adapter.

Besonders vorteilhaft ist es, wenn die Kodierelemente zueinander benachbart angeordnet sind, insbesondere in unmittelbarer Nähe zueinander. Hierdurch wird eine besonders kompakte Einheit gebildet, die sich mit einem geringen Aufwand in einem Lenksystem montieren lässt, so dass eine Vormontagegruppe geschaffen werden kann. Die unmittelbare Nähe der Kodierelemente zueinander kann auch für eine zuverlässige Erfassung der Kodierungen der Kodierelemente vorteilhaft sein, wie dies mit Bezug auf eine optoelektronische Sensoranordnung weiter unten beschrieben ist.

Für eine eindeutige Zuordnung der Drehwinkelstellung eines der Kodierelemente und des Winkelversatzes zwischen den Kodierelementen kann eine Reihe von vorteilhaften Maßnahmen getroffen werden. Eine solche Maßnahme ist beispielsweise, dass eines der Kodierelemente unregelmäßige Kodierungen aufweist und dass das andere Kodierelement regelmäßige Kodierungen aufweist.

Weiterhin ist es zur präzisen Erfassung der Drehwinkelstellung beziehungsweise des Winkelversatzes sinnvoll, wenn die Kodierungen segmentförmig, insbesondere kreissegmentförmig sind. Hierbei ist es vorteilhaft, wenn die die regelmäßigen Kodierungen bildenden Segmente eine kleinere Winkelerstreckung aufweisen als die die unregelmäßigen Kodierungen bildenden Segmente. Weiterhin können die Kodierungen der Kodierelemente so zueinander orientiert sein, dass ein eine unregelmäßige Kodierung bildendes Segment ein eine regelmäßige Kodierung bildendes Segment vollständig überdeckt. Hiermit ist gemeint, dass ein Segment, das eine unregelmäßige Kodierung bildet, einen bestimmten Winkelbereich einnimmt. Dieser Winkelbereich umschließt mit seinem Anfang und seinem Ende einen zweiten, kleineren Winkelbereich, der von einem Segment einer regelmäßigen Kodierung gebildet ist.

Im Rahmen der Erfindung können für die Sensoranordnung, einzelne Sensoren einer Sensoranordnung sowie für eine beliebige Kombination von Sensoren und Sensoranordnungen verschiedene Erfassungsprinzipien benutzt werden. Diese Prinzipien umfassen die optische, magnetische, kapazitive und/oder induktive Erfassung der Kodierelemente.

Nach einer besonders vorteilhaften Ausführungsform weist zumindest eine Sensoranordnung optoelektronische Mittel auf, mindestens umfassend eine Lichtquelle, insbesondere eine Leuchtdiode und einen Lichtempfänger, insbesondere eine CCD-Zeile. CCD steht für "Charge Coupled Device" und ist ein lichtempfindliches elektronisches Bauteil, das aus einer Reihe von Speicherelementen besteht. CCD-Zeilen werden beispielsweise in Scannern oder Digitalkameras verwendet. Mit den genannten optoelektronischen Mitteln ist es möglich, mit nur einer Lichtquelle und nur einem Lichtempfänger die Drehwinkelstellung eines der Kodierelemente und den Winkelversatz zwischen den Kodierelementen zu erfassen.

Der Lichtempfänger, insbesondere die CCD-Zeile, hat in vorteilhafter Weise eine so große Winkelerstreckung, dass in jeder Stellung des Lenkrads und der Lenkwelle mindestens eine Kodierung jedes Kodierelements vollständig erfassbar ist. Dies bedeutet nicht, dass sich die CCD-Zeile entlang eines Bogens erstrecken muss; sie kann auch beispielsweise rechteckförmig sein, wobei die Länge des Rechtecks so gewählt werden sollte, dass die Kodierungen vollständig erfasst werden können.

Die optoelektronischen Mittel können ein lichtleitendes Element und/oder ein lichtreflektierendes Element und/oder ein lichtsammelndes Element aufweisen. Hierdurch lässt sich die Sensoranordnung optimal an den zur Verfügung stehenden Bauraum anpassen. Beispielsweise können Lichtquelle und Lichtempfänger bezogen auf die Kodierelemente auf einer Seite angeordnet sein, während auf der anderen Seite der Kodierelemente ein lichtumleitendes und/oder ein lichtreflektierendes Element vorgesehen ist.

Bei der Verwendung von optoelektronischen Mitteln für die Sensoranordnung ist es vorteilhaft, wenn mindestens ein Kodierelement lichtundurchlässig ist und lichtdurchlässige Öffnungen aufweist, so dass Kodierungen durch die Öffnungen und dazwischenliegenden Stege gebildet werden. Entsprechend ist es möglich, dass mindestens ein Kodierelement lichtdurchlässig ist und lichtundurchlässige Bereiche aufweist, so dass Kodierungen durch die lichtundurchlässigen Bereiche und dazwischenliegende lichtdurchlässige Bereiche gebildet werden.

Die Sensoranordnung kann auch auf einem magnetischen Prinzip beruhen. Hierfür ist es vorteilhaft, wenn mindestens ein Kodierelement als unterschiedliche Magnetisierungen ausgebildete Kodierungen aufweist.

Es ist auch möglich, dass zumindest eine Sensoranordnung auf einem induktiven oder kapazitiven Prinzip beruht.

Weitere Vorteile, Merkmale und Einzelheiten der Erfindung ergeben sich aus der nachfolgenden Beschreibung, in der unter Bezugnahme auf die Zeichnung besonders bevorzugte Ausführungsbeispiele im Einzelnen beschrieben sind. Dabei können die in der Zeichnung gezeigten sowie in den Ansprüchen sowie in der Beschreibung erwähnten Merkmale jeweils einzeln für sich oder in beliebiger Kombination erfindungswesentlich sein.

In der Zeichnung zeigen:
- Figur 1: eine perspektivische Ansicht eines Teils eines Lenksystems gemäß einer ersten Ausführungsform;
- Figur 2: eine perspektivische Ansicht eines Teiles eines Lenksystems gemäß einer zweiten Ausführungsform;
- Figur 3: eine perspektivische Ansicht einer Vorrichtung zur Anordnung in einem Lenksystem nach Figur 1 oder 2 gemäß einer ersten Ausführungsform mit zwei Kodierelementen;

- Figur 4: einen in Figur 3 mit IV markierten Ausschnitt; und
- Figur 5: eine Vorrichtung zur Anordnung in einem Lenksystem nach Figur 1 oder 2 gemäß einer zweiten Ausführungsform, ebenfalls mit zwei Kodierelementen.

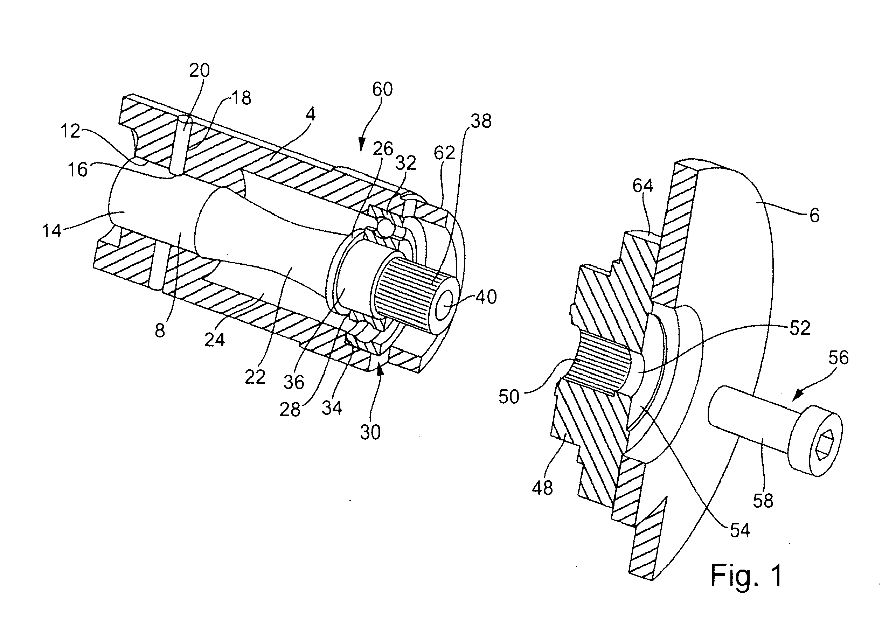

In Figur 1 ist eine Vorrichtung für ein Lenksystem eines Kraftfahrzeugs dargestellt. Diese weist eine nur abschnittsweise dargestellte Lenkwelle 4, eine Lenkradaufnahme 6 sowie ein elastisch verformbares Element 8 auf. Die Lenkradaufnahme 6 ist Teil eines nicht weiter dargestellten Lenkrads.

Die Lenkwelle 4 weist eine sich in Längsrichtung der Lenkwelle erstreckende Längsbohrung 12 auf, in der ein endseitiger Abschnitt 14 des elastisch verformbaren Elements 8 spielfrei aufgenommen ist. In dem endseitigen Abschnitt 14 des elastisch verformbaren Elements ist eine Bohrung 16 ausgebildet, die mit einer Querbohrung 18, die in der Lenkwelle 4 vorgesehen ist, fluchtet. In den Bohrungen 16 und 18 ist ein Stift 20 aufgenommen, der das elastisch verformbare Element 8 verdrehsicher mit der Lenkwelle 4 verbindet.

An den endseitigen Abschnitt 14 des elastisch verformbaren Elements 8 schließt sich in Richtung auf die Lenkradaufnahme 6 ein radial geschwächter Bereich 22 an. Dieser kann dadurch, dass dessen Durchmesser gegenüber dem Durchmesser des endseitigen Abschnitts 14 verkleinert ist, leichter tordiert werden. Um unerwünschte Kerbwirkungen zu vermeiden, ist der Bereich 22 in Längsrichtung des Elements 8 gesehen relativ lang.

Der Bereich 22 grenzt an eine Ringschulter 26, die als Anschlag für eine Innenschale 28 eines insgesamt mit 30 bezeichneten, als Kugellager ausgebildeten Drehlagers 30 dient. Das Drehlager 30 weist ferner eine Außenschale 32 auf, die in axialer Richtung an einem in der Lenkwelle 4 ausgebildeten Absatz 34 gesichert ist. Mit Hilfe des Drehlagers 30 kann das Element 8 knicksicher und präzise in der Lenkwelle 4 geführt werden. Hierfür weist das Element 8 einen zylindrischen Abschnitt 36 auf, der spielfrei an der Innenschale 28 des Drehlagers 30 anliegt. An den zylindrischen Abschnitt 36 schließt sich ein über das Drehlager 30 hervorstehender Abschnitt mit einer Außenverzahnung 38 an. Konzentrisch zur Außenverzahnung 38 ist ein zentrisches Innengewinde 40 vorgesehen.

Die Lenkradaufnahme 6 ist im Wesentlichen rotationssymmetrisch ausgebildet und weist eine sich in Richtung auf die Lenkwelle 4 erstreckende, hohlzylindrische Erweiterung 48 auf. In dieser ist eine zentrisch angeordnete Innenverzahnung 50 vorgesehen, die an eine zylindrische Öffnung 52 grenzt. Benachbart zur Öffnung 52 ist eine ringförmige Anschlagfläche 54 für ein Befestigungselement 56 vorgesehen. Dieses weist ein Außengewinde 58 auf, das zum Eingriff in das Innengewinde 40 des Elements 8 ausgebildet ist.

Die in Figur 1 dargestellte Vorrichtung wird folgendermaßen montiert. Zunächst wird eine insgesamt mit 60 bezeichnete Baugruppe geschaffen, die die Lenkwelle 4 und das Element 8 umfasst. Die Baugruppe 60 umfasst ferner den Stift 20 sowie das Drehlager 30. Anschließend wird der Magnetring 42 des Drehmomentsensors 10 auf eine am freien Ende der Lenkwelle 4 ausgebildete Aufnahme 62 aufgeschoben. Anschließend wird der Stator 44 des Drehmomentsensors 10 auf eine an der Lenkradaufnahme 6 ausgebildete Schulter 64 aufgeschoben.

Dann wird die Lenkradaufnahme 6 zusammen mit dem Stator 44 auf die Baugruppe 60 aufgeschoben, so dass die Innenverzahnung 50 mit der Außenverzahnung 38 in Eingriff gerät. Abschließend wird das Befestigungselement 56 durch die Öffnung 52 der Lenkradaufnahme 6 eingefügt, so dass das Außengewinde 58 des Befestigungselements 56 in Eingriff mit dem Innengewinde 40 des Elements 8 gerät. Durch Drehen des Befestigungselements 56 ist die Lenkradaufnahme 6 in einer zur Drehebene des nicht dargestellten Lenkrads senkrechten Richtung an dem Element 8 gesichert. Die in Figur 1 dargestellte Vorrichtung weist in der gewählten Perspektive nicht sichtbare Anschläge auf, mit denen die durch Torsion des Elements 8 ermöglichte Relativbewegung zwischen Lenkradaufnahme 6 und Lenkwelle 4 auf einen Winkelbereich von +/- 7° begrenzt ist.

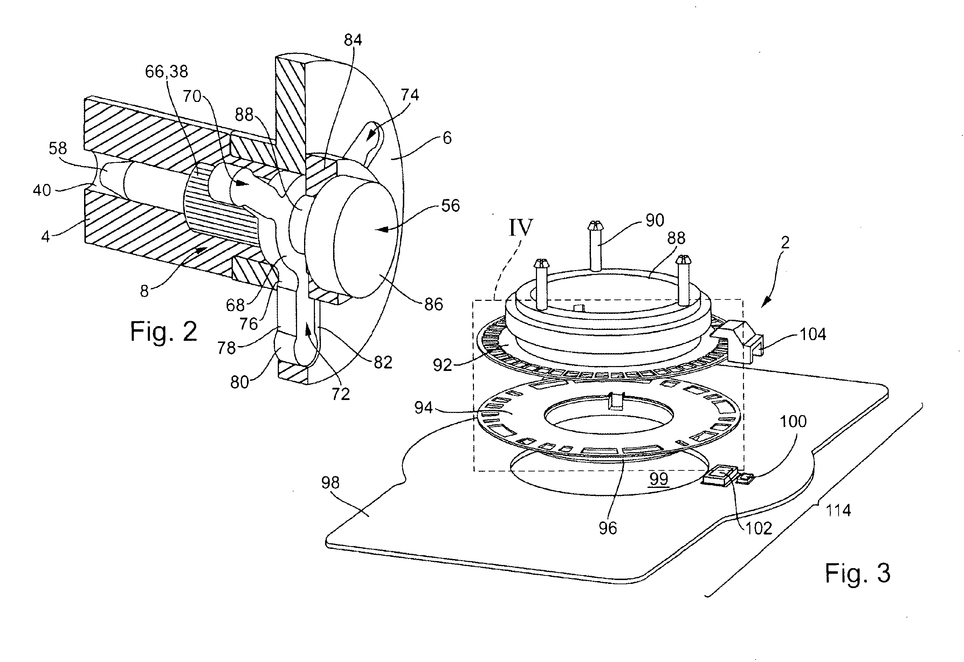

In der in Figur 2 dargestellten Vorrichtung sind zu den Bauteilen der Vorrichtung gemäß Figur 1 funktionsgleiche Bauteile mit gleichen Bezugszeichen versehen. So ist auch bei der Vorrichtung gemäß Figur 2 eine Lenkwelle 4 über ein insgesamt mit 8 bezeichnetes, elastisch verformbares Element mit einer Lenkradaufnahme 6 verbunden. Das elastisch verformbare Element 8 weist einen zentrischen Grundkörper 66 auf, an dem eine Außenverzahnung 38 ausgebildet ist. Die Außenverzahnung 38 greift in eine entsprechende, in der Lenkwelle 4 ausgebildete Innenverzahnung ein, so dass der Grundkörper 66 drehfest in der Lenkwelle 4 gelagert ist.

An den Grundkörper 66 schließt sich in Richtung auf die Lenkradaufnahme 6 ein Ringkörper 68 an. Von diesem aus erstrecken sich in radialer Richtung nach außen drei biegeelastische Abschnitte 70, 72 und 74. Diese sind jeweils zueinander um 120° winkelversetzt. Die biegeelastischen Abschnitte 70 bis 74 weisen jeweils benachbart zum Ringkörper 68 einen Materialschwächungsbereich 76, einen sich anschließenden Abschnitt 78 sowie einen Materialerweiterungsbereich 80 auf.

Die biegeelastischen Abschnitte 70 bis 74 sind jeweils in sich in radialer Richtung erstreckenden Nuten 82 aufgenommen, die in der Lenkradaufnahme 6 vorgesehen sind. Die Breite der Nuten 82 entspricht der Breite der Materialerweiterungsbereiche 80, so dass diese spielfrei in den Nuten 82 aufgenommen sind. Hierdurch sind die Abschnitte 78 und auch die Materialschwächungsbereich 76 von den Wandungen der Nuten 82 beabstandet.

Benachbart zu dem Ringkörper 68 des Elements 8 und zu der Lenkradaufnahme 6 ist ein ringförmiger Abstandhalter 84 vorgesehen, der zur Anlage des Kopfs 86 des Befestigungselements 56 dient. Dieses Befestigungselement weist einen Schaft 88 auf, der den Ringkörper 68 und den Grundkörper 66 des Elements 8 durchgreift. Der Schaft 88 weist endseitig ein Außengewinde 58 auf, das in ein in der Lenkwelle 4 ausgebildetes Innengewinde 40 eingreift. Auf diese Weise ist die Lenkradaufnahme 6 in axialer Richtung an der Lenkwelle 4 gesichert.

Wenn auf die in Figur 2 dargestellte Vorrichtung durch Drehen an einem nicht dargestellten, mit der Lenkradaufnahme 6 verbundenen Lenkrad eine Kraft eingeleitet wird, wird diese über die Nuten 82 der Lenkradaufnahme 6 auf die biegeelastischen Abschnitte 70 bis 74 des Elements 8 übertragen. Je nach Höhe der Lenkkräfte werden die biegeelastischen Abschnitte 70 bis 74 relativ zum Grundkörper 66 beziehungsweise zum Ringkörper 68 verbogen. Das Maß der Biegung kann durch geeignete Dimensionierung der Materialschwächungsbereiche 76 eingestellt werden. Über den Ringkörper 68, den Grundkörper 66 und schließlich über die Außenverzahnung 38 kann ein Drehmoment über eine in der Lenkwelle 4 ausgebildete Innenverzahnung in die Lenkwelle 4 eingeleitet werden.

In Figur 3 ist eine Vorrichtung zur Anordnung in einem Lenksystem eines Kraftfahrzeugs insgesamt mit dem Bezugszeichen 2 bezeichnet. Diese weist einen Haltering 88 auf, der sich in axialer Richtung erstreckende, über den Umfang des Halterings 88 verteilte Zapfen 90 aufweist. Mit dem Haltering 88 ist drehfest ein flaches, ringförmiges erstes Kodierelement 92 verbunden.

Parallel zu dem ersten Kodierelement ist ein zweites Kodierelement 94 vorgesehen, das ebenfalls flach und ringförmig ausgebildet ist. Dieses zweite Kodierelement ist drehfest mit einem Haltering 96 verbunden. Parallel zu den Kodierelementen 92 und 94 ist eine Steuerplatine 98 vorgesehen, die einen zentralen, kreisförmigen Durchbruch 99 aufweist. Auf der Steuerplatine 98 ist eine als Diode ausgebildete Lichtquelle 100 und ein als CCD-Zeile ausgebildeter Lichtempfänger 102 angeordnet. Die Lichtquelle 100 sendet einen Lichtstrahl in Richtung auf ein lichtleitendes Element 104, das bezogen auf die Lichtquelle 100 auf der anderen Seite der Kodierelemente 92 und 94 angeordnet ist. Das lichtleitende Element 104 leitet das Licht so um, dass es durch die kodierten Randbereiche der Kodierelemente 92 und 94 hindurch zurück zu dem Lichtempfänger 102 gelangt.

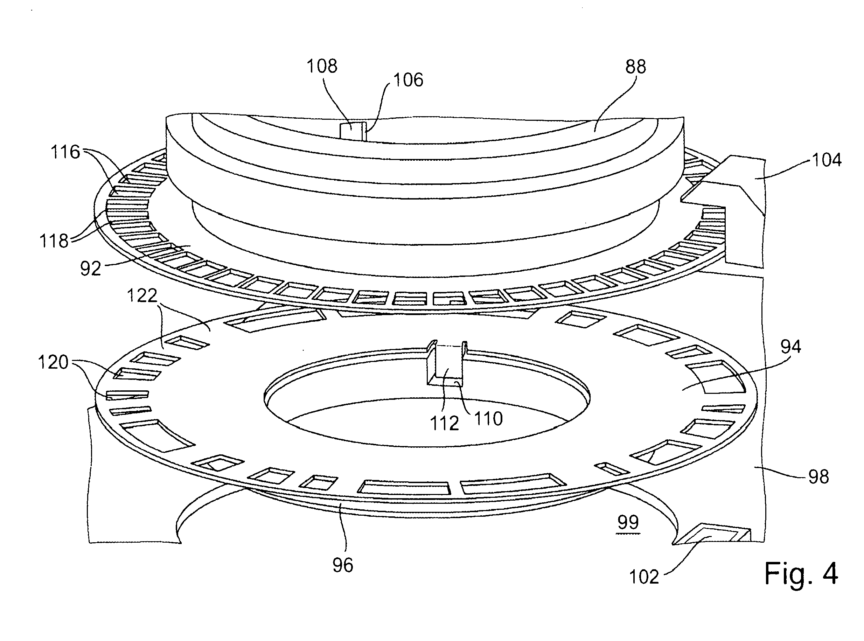

Die Vorrichtung 2 wird nun detaillierter mit Bezug auf Figur 4 beschrieben. Die drehfeste Verbindung zwischen dem Haltering 88 und dem Kodierelement 92 wird dadurch erreicht, dass der Haltering 88 mindestens eine Nut 106 aufweist, in die ein Keilelement 108 eingreift, das einstückig mit dem Kodierelement 92 ausgebildet ist. Das Keilelement 108 liegt spielfrei in der Nut 106, so dass das Kodierelement 92 zumindest in Drehrichtung spielfrei an dem Haltering 88 befestigt ist.

In entsprechender Weise weist der Haltering 96 mindestens eine Nut 110 auf, in die ein an dem Kodierelement 94 ausgebildetes Keilelement 112 spielfrei eingreift. Hierdurch ist das Kodierelement 94 spielfrei an dem Haltering 96 gelagert.

Der Haltering 88 mit dem Kodierelement 92 lässt sich beispielsweise an der in Figur 1 dargestellten Lenkradaufnahme 6, die Teil des nicht dargestellten Lenkrads ist, befestigen. Hierfür wird der Ring 88 auf die Erweiterung 48 der Lenkradaufnahme 6 aufgeschoben. Die drehfeste Verbindung des Halteelements 88 mit der Lenkradaufnahme 6 wird mit Hilfe der Zapfen 90 sichergestellt, die in entsprechende (rückwärtige, in der gewählten Perspektive in Figur 1 nicht sichtbare) Zapfenaufnahmen eingesteckt werden. In entsprechender Weise lässt sich der Haltering 96 mit dem Kodierelement 94 mit der in Figur 1 dargestellten Lenkwelle 4 verbinden, indem der Haltering 96 auf die Aufnahme 62 der Lenkwelle 4 aufgeschoben wird. Der Haltering 96 kann beispielsweise über einen Presssitz drehfest an der Aufnahme 62 der Lenkwelle 4 gesichert werden.

In entsprechender Weise lassen sich die Halteringe 88 und 96 mit den Kodierelementen 92 und 94 auch an der in Figur 2 dargestellten Lenkradaufnahme 6 beziehungsweise an der in Figur 2 dargestellten Lenkwelle 4 befestigen.

Es ist prinzipiell aber auch möglich, den Haltering 88 und das Kodierelement 92 mit der Lenkwelle 4 zu verbinden und den Haltering 96 und das Kodierelement 94 mit der Lenkradaufnahme 6. Auch dies gilt sowohl für die in Figur 1 als auch für die in Figur 2 dargestellte Vorrichtung.

Die Lichtquelle 100, der Lichtempfänger 102 sowie das lichtleitende Element 104 bilden gemeinsam eine Sensoranordnung 114. Diese Sensoranordnung 114 ist sowohl dem Kodierelement 92 als auch dem Kodierelement 94 zugeordnet. Mit Hilfe der Sensoranordnung 114 kann die Drehwinkelstellung des Kodierelements 94 sowie der Winkelversatz zwischen den Kodierelementen 92 und 94 bestimmt werden, der entsteht, wenn die Lenkradaufnahme 6 durch Anliegen eines Drehmoments relativ zur Lenkwelle 4 verdreht ist (vgl. Figuren 1 und 2).

Wie am besten aus Figur 4 ersichtlich, weist das Kodierelement 92 regelmäßige Kodierungen auf. Hierfür ist das Kodierelement 92 im Wesentlichen lichtundurchlässig ausgebildet und weist lichtdurchlässige Öffnungen 116 auf, die durch Stege 118 begrenzt sind. Die Öffnungen 116 und die Stege 118 bilden segmentförmige Kodierungen. Aus Figur 4 ist erkennbar, dass die Öffnungen 116 und die Stege 118 jeweils die gleiche Winkelerstreckung aufweisen. Im Gegensatz hierzu sind in dem Kodierelement 94 sich in einem Randbereich erstreckenden Öffnungen 120 unterschiedlich groß, wie auch die zwischen den Öffnungen 120 angeordneten Stege 122. Somit bilden die Öffnungen 120 und die Stege 122 unregelmäßige Kodierungen.

Um mit Hilfe der Sensoranordnung 114 sowohl die Drehwinkelstellung der in den Figuren 1 und 2 dargestellten Lenkradaufnahme 6 als auch den Winkelversatz zwischen dieser Lenkradaufnahme 6 und der ebenfalls in den Figuren 1 und 2 dargestellten Lenkwelle 4 erfassen zu können, sind die Öffnungen 116 des Kodierelements 92 kleiner als die Öffnungen 120 des Kodierelements 94. In entsprechender Weise sind die Stege 118 hinsichtlich ihrer Winkelerstreckung kleiner als die Stege 122.

Der den Kodierelementen 92 und 94 zugeordnete Lichtempfänger 102 der Sensoranordnung 114 ist so lang, dass er in jeder Stellung der Lenkradaufnahme 6 beziehungsweise des Lenkrads und der Lenkwelle 4 mindestens eine Kodierung jedes Kodierelements 92 und 94 vollständig erfassen kann. Der Drehwinkel des Lenkrads kann dadurch erfasst werden, dass zumindest eine der Öffnungen 120 oder zumindest einer der Stege 122 vollständig mit Hilfe des von dem lichtleitenden Element 104 umgeleiteten Lichtstrahls optisch erfasst werden kann. Die Stege 118 des Kodierelements 92 sind so angeordnet, dass immer mindestens ein Steg 118 vollständig von dem Lichtempfänger 102 erkannt wird, auch wenn die Lenkradaufnahme 6 und die Lenkwelle 4 um einen maximal zu erfassenden Torsionswinkel von beispielsweise +/- 4° zueinander winkelversetzt sind. Die Stege 122 des Kodierelements 94 sind so angeordnet, dass in allen Drehstellungen mindestens eine Öffnung 120 oder mindestens ein Steg 122 vollständig von dem Lichtempfänger 102 erfasst werden kann.

Die Größe und Lage einer Öffnung 120 wird als beleuchtete Fläche auf dem Lichtempfänger 102 abgebildet. Diese entspricht einer bestimmten Drehwinkelstellung des Lenkrads. Die beleuchtete Fläche ist von mindestens einem der Stege 118 durchbrochen, so dass ein Lichtmuster entsteht, wobei über die Lage der Lichtdurchbrechung relativ zu der beleuchteten Fläche auf den Winkelversatz zwischen Lenkwelle 4 und Lenkradaufnahme 6 geschlossen werden kann.

Das vom Lichtempfänger 102 empfangene Lichtmuster kann mit Hilfe einer nicht dargestellten Auswerteeinheit ausgewertet werden. Diese kann beispielsweise auf der Steuerplatine 98 angeordnet sein.

Selbstverständlich könnten entlang des Umfangs der Kodierelemente 92 und 94 auch weitere Sensoranordnungen vorgesehen sein, beispielsweise um die mit Hilfe der Vorrichtung 2 erzielbare Auflösung zu erhöhen und/oder um auch bei Ausfall einer Sensoranordnung den Drehwinkel und/oder den Winkelversatz bestimmen zu können.

Um eine möglichst hohe Auflösung zu erreichen, empfiehlt es sich, bei der in Figur 3 dargestellten Sensoranordnung 114 die Kodierelemente 92 und 94 mit einem möglichst geringen axialen Abstand zueinander anzuordnen. Hierdurch ist es möglich, dass die Öffnungen und Stege der Kodierelemente 92 und 94 optisch scharf auf dem Lichtempfänger 102 abgebildet werden.

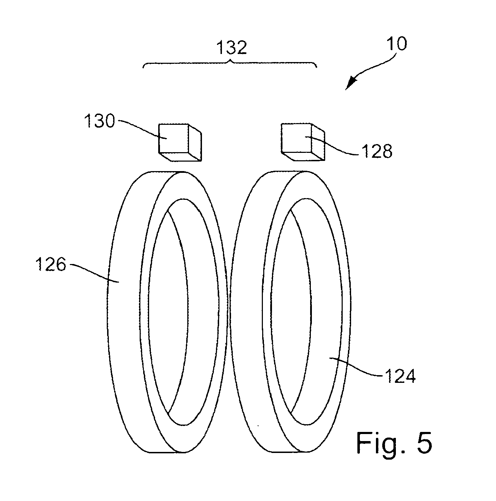

Anstelle der in den Figuren 3 und 4 dargestellten Vorrichtung 2 kann auch eine in Figur 5 dargestellte Vorrichtung 10 in einem Lenksystem gemäß Figuren 1 oder 2 eingesetzt werden. Die Vorrichtung 10 weist ringförmige Kodierelemente 124 und 126 auf. Diese weisen jeweils Segmente mit unterschiedlichen Magnetisierungen auf. Jedem der Kodierelemente 124 und 126 ist ein eigener Sensor 128 beziehungsweise 130 zugeordnet. Die Sensoren 128 und 130 bilden eine Sensoranordnung 132.

Das Kodierelement 124 kann jeweils mit der in Figuren 1 oder 2 dargestellten Lenkwelle 4 verbunden werden, während das Kodierelement 126 mit der in den Figuren 1 und 2 dargestellten Lenkradaufnahme 6 verbunden werden kann. Das Kodierelement 126 kann auch mit der Lenkradaufnahme 6 und das Kodierelement 124 mit der Lenkwelle 4 verbunden werden. Für die Ausgestaltung der mechanischen Verbindung wird auf die Ausführungen zur Befestigung der Kodierelemente 92 und 94 Bezug genommen.

Es versteht sich, dass im Rahmen dieser Erfindung auch eine Kombination von Sensoranordnungen und/oder Sensoren möglich ist, die auf verschiedenen physikalischen Prinzipen beruhen.

## Patentansprüche

1. Vorrichtung (2, 10) zur Anordnung in einem Lenksystem eines Kraftfahrzeugs, mit einem ersten Kodierelement (92, 124), das mit dem Lenkrad des Lenksystems drehwinkelfest verbindbar ist, und mit einem zweiten Kodierelement (94, 126), das zumindest mittelbar mit der Lenkwelle (4) des Lenksystems drehwinkelfest und/oder drehwinkelgekoppelt verbindbar ist, **dadurch gekennzeichnet, dass** die Vorrichtung (2, 10) mindestens eine Sensoranordnung (114, 132) zur Erfassung der Drehwinkelstellung eines der Kodierelemente (92, 94, 124, 126) und zur Erfassung des Winkelversatzes zwischen den Kodierelementen (92, 94; 124, 126) aufweist.

2. Vorrichtung (2, 10) nach Anspruch 1, **dadurch gekennzeichnet, dass** die Vorrichtung (2, 10) die Lenkwelle (4) und das Lenkrad umfasst und die Lenkwelle und das Lenkrad so miteinander verbunden sind, dass sie zueinander einen Winkelversatz zulassen.

3. Vorrichtung (2, 10) nach Anspruch 2, **dadurch gekennzeichnet, dass** der Winkelversatz maximal ±7° beträgt.

4. Vorrichtung (2, 10) nach mindestens einem der vorhergehenden Ansprüche, **dadurch gekennzeichnet, dass** die Sensoranordnung (114) mindestens einen Sensor (100, 102, 104) umfasst, der dem ersten Kodierelement (92) und dem zweiten Kodierelement (94) zugeordnet ist.

5. Vorrichtung (2, 10) nach mindestens einem der vorhergehenden Ansprüche, **dadurch gekennzeichnet, dass** die Sensoranordnung (134) mindestens zwei Sensoren (128, 130) umfasst, die jeweils einem Kodierelement (124, 126) zugeordnet sind.

6. Vorrichtung (2, 10) nach mindestens einem der vorhergehenden Ansprüche, umfassend eine Auswerteeinheit zur Auswertung der Signale der Sensoranordnung.

7. Vorrichtung (2, 10) nach mindestens einem der vorhergehenden Ansprüche, **dadurch gekennzeichnet, dass** die Kodierelemente (92, 94, 124, 126) ringförmig oder scheibenförmig ausgebildet sind.

8. Vorrichtung (2, 10) nach mindestens einem der vorhergehenden Ansprüche, **dadurch gekennzeichnet, dass** die Kodierelemente (92, 94, 124, 126) zueinander benachbart angeordnet sind, insbesondere in unmittelbarer Nähe zueinander.

9. Vorrichtung (2, 10) nach mindestens einem der vorhergehenden Ansprüche, **dadurch gekennzeichnet, dass** eines der Kodierelemente (94, 126) unregelmäßige Kodierungen aufweist und dass das andere Kodierelement (92, 124) regelmäßige Kodierungen aufweist.

10. Vorrichtung (2, 10) nach mindestens einem der vorhergehenden Ansprüche, **dadurch gekennzeichnet, dass** die Kodierungen segmentförmig, insbesondere kreissegmentförmig sind.

11. Vorrichtung (2, 10) nach Anspruch 10, **dadurch gekennzeichnet, dass** die die regelmäßigen Kodierungen bildenden Segmente eine kleinere Winkelerstreckung aufweisen als die die unregelmäßigen Kodierungen bildenden Segmente.

12. Vorrichtung (2, 10) nach Anspruch 11, **dadurch gekennzeichnet, dass** die Kodierungen der Kodierelemente (92, 94, 124, 126) so zueinander orientiert sind, dass ein eine unregelmäßige Kodierung bildendes Segment ein eine regelmäßige Kodierung bildendes Segment vollständig überdeckt.

13. Vorrichtung (2, 10) nach mindestens einem der vorhergehenden Ansprüche, **dadurch gekennzeichnet, dass** zumindest eine Sensoranordnung (114) optoelektronische Mittel aufweist, mindestens umfassend eine Lichtquelle (100), insbesondere eine Leuchtdiode und einen Lichtempfänger (102), insbesondere eine CCD-Zeile.

14. Vorrichtung (2, 10) nach Anspruch 13, **dadurch gekennzeichnet, dass** der Lichtempfänger (102) eine so große Winkelerstreckung aufweist, dass in jeder Stellung des Lenkrads und der Lenkwelle (4) mindestens eine Kodierung jedes Kodierelements (92, 94, 124, 126) vollständig erfassbar ist.

15. Vorrichtung (2, 10) nach Anspruch 13 oder 14, **dadurch gekennzeichnet, dass** die optoelektronischen Mittel ein lichtleitendes Element (104) und/oder ein lichtreflektierendes Element und/oder ein lichtsammelndes Element aufweisen.

16. Vorrichtung (2, 10) nach mindestens einem der Ansprüche 13 bis 15, **dadurch gekennzeichnet, dass** mindestens ein Kodierelement (92, 94) lichtundurchlässig ist und lichtdurchlässige Öffnungen (116, 120) aufweist, so dass Kodierungen durch die Öffnungen (116, 120) und dazwischenliegende Stege (118, 122) gebildet werden.

17. Vorrichtung (2, 10) nach mindestens einem der Ansprüche 13 bis 16, **dadurch gekennzeichnet, dass** mindestens ein Kodierelement lichtdurchlässig ist und lichtundurchlässige Bereiche aufweist, so dass Kodierungen durch die lichtundurchlässigen Bereiche und dazwischenliegende lichtdurchlässige Bereiche gebildet werden.

18. Vorrichtung (2, 10) nach mindestens einem der vorhergehenden Ansprüche, **dadurch gekennzeichnet, dass** zumindest eine Sensoranordnung (132) auf einem magnetischen Prinzip beruht.

19. Vorrichtung (2, 10) nach Anspruch 18, **dadurch gekennzeichnet, dass** mindestens ein Kodierelement (124, 126) als unterschiedliche Magnetisierungen ausgebildete Kodierungen aufweist.

20. Vorrichtung (2, 10) nach mindestens einem der vorhergehenden Ansprüche, **dadurch gekennzeichnet, dass** zumindest eine Sensoranordnung auf einem induktiven oder kapazitiven Prinzip beruht.
